# EUROPÄISCHE PATENTANMELDUNG

(11) **EP 0 924 504 A2**
(43) Veröffentlichungstag der Anmeldung: **23.06.1999**
(21) Anmeldenummer: 98123688.8
(22) Anmeldetag: 12.12.1998
(51) Int. Cl.: G01N 1/22, B01D 53/86

(54) **Entnahmesonde für Sauerstoff-Messungen an kohlenstaubgefeuerten Dampferzeugeranlagen**

(30) Priorität: 19.12.1997 DE 19756788
(71) Anmelder: Babcock Kraftwerkstechnik GmbH, 46049 Oberhausen (DE)
(72) Erfinder: Ristau, Jürgen, 10367 Berlin (DE); Geyer, Horst, 13509 Berlin (DE)
(74) Vertreter: Radünz, Ingo, Dipl.-Ing.

(57) **Zusammenfassung**

Es wird eine Entnahmesonde 10 für Sauerstoff-Messungen an kohlenstaubgefeuerten Dampferzeugeranlagen angegeben, die aus einem Entnahmesondenrohr 1 besteht, das mit einer Anzahl von im Entnahmesondenrohr angeordneten Entnahmebohrungen 6 versehen ist. An dem Entnahmesondenrohr 1 ist weiterhin eine Entnahmestelle 7 für ein angeschlossenes O₂-Meßgerät 13 angeordnet. Dabei ist in dem Entnahmesondenrohr 1 eine Reinigungsvorrichtung geführt, die für die Abreinigung der Entnahmebohrungen 6 und der Entnahmestelle 7 für das angeschlossene O₂-Meßgerät vorgesehen ist.

## Beschreibung

Die Erfindung betrifft eine Entnahmesonde für Sauerstoff-Messungen an kohlenstaubgefeuerten Dampferzeugeranlagen.

Neben der Kohlenstoffoxid-Messung ist an Dampferzeugeranlagen die Sauerstoff-Messung eine grundlegende Voraussetzung zur Regelung der Verbrennungsluft für die sogenannte DENOX-Fahrweise einer solchen Anlage.

Für die DENOX-Fahrweise einer Dampferzeugeranlage ist es wichtig, daß gewisse O₂-Werte eingehalten werden. Einerseits können bei zu hohen O₂-Werten die NOₓ-Werte die vom Gesetzgeber vorgegebenen Grenzwerte für einen umweltschonenden Betrieb der Dampferzeugeranlage überschreiten. Andererseits kann es bei zu kleinen O₂-Werten zu unzulässig hoher CO-Bildung kommen. Zum Schutz der Dampferzeugeranlage wird dann die Anlage zwangsweise abgeschaltet.

Damit es zu keiner Zwangsabschaltung kommt, wird der O₂-Messung eine große Bedeutung zugemessen. Hinsichtlich der zugemessenen Bedeutung der O₂-Messung werden an geeigneten Rauchgasquerschnitten der Dampferzeugeranlage O₂-Messungen mit Entnahmesonden durchgeführt.

Dabei sammeln die Entnahmesonden die Rauchgasströme, die über den Rauchgasquerschnitt entnommen werden, und führen diese entnommenen Rauchgasströme zum Prüfkopf eines entsprechenden herkömmlichen Meßgerätes.

Hierbei wird die Förderung des Rauchgases zur Meßstelle mittels eines zusätzlichen Gebläses oder unter Ausnützung des rauchgasseitigen Druckverlustes über einige Heizflächen im Dampferzeuger sichergestellt.

Die Meßgeräte für die O₂-Messung arbeiten zwar zuverlässig, aber trotzdem kommt es häufig zu einem Ausfall der O₂-Messung, weil die Entnahmesonden im aschebeladenen Rauchgasstrom verschmutzen und eine Förderung des Rauchgases zur Meßstelle des angeschlossenen Meßgerätes unterbunden wird.

Weitere mit der Fahrweise einer Dampferzeugeranlage verbundenen Betriebsbedingungen, wie z.B. Wassereinspritzung vor Mühle, Membranwandreinigung mit Wasserlanzenbläser und Dampfblasen zur Überhitzerreinigung, bringen die im Rauchgas befindliche Asche zum Anbacken im Entnahmesondenrohr selbst und an den Eintrittsöffnungen für die zu entnehmenden Rauchgasströme. Darüber hinaus führt jeder Anfahrvorgang (Kaltstart) einer Dampferzeugeranlage zu einer Taupunktunterschreitung und damit ebenfalls wieder zu Anbackungen im Entnahmesondenrohr selbst und an den Eintrittsöffnungen für die zu entnehmenden Rauchgasströme.

Aus dem Grunde werden viele Dampferzeugeranlagen mit entsprechenden Reinigungsmöglichkeiten ausgestattet, die allerdings nur bei Stillstand der Dampferzeugeranlage zur Anwendung gebracht werden können oder die die O₂-Messung für einen nicht tolerierbaren Zeitraum ausfallen lassen.

Der Erfindung liegt die Aufgabe zugrunde, eine Entnahmesonde zu schaffen, die während der Dauer des Betriebes einer Dampferzeugeranlage zuverlässig und störungsfrei arbeitet, so daß die wichtigen O₂-Messungen einwandfrei durchgeführt werden können und somit eine zwangsweise Abschaltung der Dampferzeugeranlage aufgrund fehlerhafter O₂-Messungen verhindert wird.

Die Aufgabe wird erfindungsgemäß dadurch gelöst, daß die Entnahmesonde mit einer Reinigungsvorrichtung ausgerüstet ist, die während des Betriebes der Dampferzeugeranlage nach Bedarf jederzeit die Entnahmesonde über den gesamten Bereich wie auch über die Entnahmebohrungen und eine Meßstelle für ein angeschlossenes O₂-Meßgerät abreinigt.

Weitere Vorteile der Erfindung sind in den Unteransprüchen angegeben. Dabei hat sich als besonders vorteilhaft herausgestellt, daß die Reinigungsvorrichtung an einer umlaufenden Kette befestigt ist, so daß eine aufwendige Aufwickelvorrichtung entfallen kann. Weiterhin besteht die Reinigungsvorrichtung vorteilhafterweise aus einer Rohrbürste. An den Endpunkten des Entnahmesondenrohres ist jeweils ein Kettenrad für die umlaufende Kette angeordnet.

Weitere Einzelheiten und Vorteile der Erfindung sind anhand eines in der Zeichnung dargestellten Ausführungsbeispiels näher erläutert. Es zeigen:
- Fig. 1: eine in einem angedeuteten Rauchgaskanal angeordnete Entnahmesonde nach der Erfindung und
- Fig. 2: eine Seitenansicht in Rauchgasströmung nach der Fig. 1 mit einer Anordnung mehrerer Entnahmesonden nach der Erfindung über den Rauchgasquerschnitt verteilt.

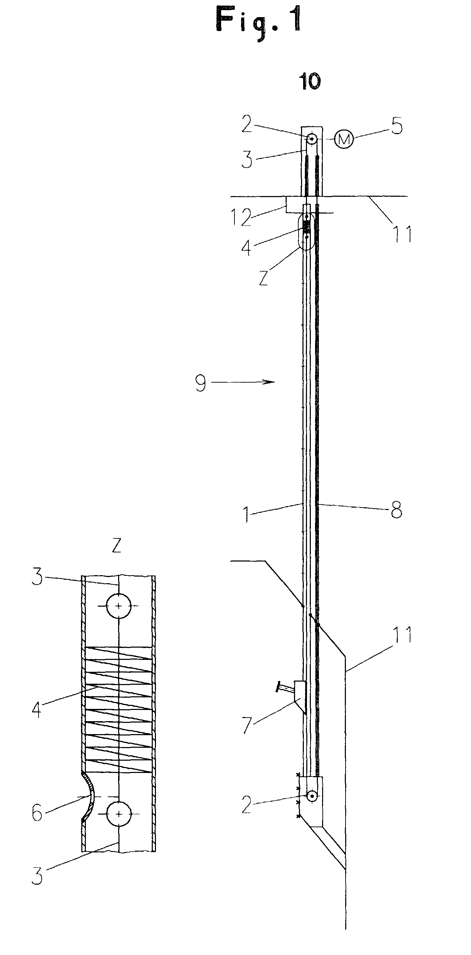

In Fig. 1 ist eine Entnahmesonde 10 dargestellt, die in einem andeutungsweise gezeigten Rauchgaskanal mit den Rauchgaswänden 11 angeordnet ist. Die Entnahmesonde 10 besteht aus einem Entnahmesondenrohr 1 mit Entnahmebohrungen 6, wie die Einzelheit Z zeigt. Dabei ist die Entnahmesonde 10 senkrecht zur Rauchgasströmung 9 angebracht. Die Entnahmebohrungen 6 sind im wesentlichen in einer geraden Linie und einer ausgewählten Anzahl im Entnahmesondenrohr 1 angeordnet.

Das Entnahmesondenrohr 1 überspannt den Bereich des auszumessenden Rauchgasquerschnittes sowie die für den Förderdruck ausgewählten notwendigen Heizflächen des Dampferzeugers.

An den Endpunkten des Entnahmesondenrohres 1 ist jeweils ein Kettenrad 2 für eine umlaufende Kette 3 angeordnet, in die über zwei Oesen eine Reinigungsvorrichtung, beispielsweise eine handelsübliche Rohrbürste 4, eingeschaltet ist. Dabei wird das Kettenrad 2, das mit einem Elektromotor 5 verbunden ist, von diesem Elektromotor angetrieben, so daß die Rohrbürste 4 im Entnahmesondenrohr 1 von einem Umkehrpunkt zum anderen Umkehrpunkt gezogen wird.

Wenn die Rohrbürste 4 durch das Entnahmesondenrohr 1 gezogen wird, werden die im Entnahmesondenrohr angeordneten, nach innen gelegenen Entnahmebohrungen 6 und eine Entnahmestelle 7 für ein anzuschließendes O₂-Meßgerät vollständig abgereinigt, so daß die im Entnahmesondenrohr gesammelten Rauchgasströme frei und ungehindert zur Meßstelle des angeschlossenen Meßgerätes gefördert werden.

Die Ehtnahmesonde 10 mit dem Entnahmesondenrohr 1 und der umlaufenden Kette 3 ist mit einem zweiten Rohr 8 gekapselt und so gestaltet, daß mögliche Lecks die O₂-Messung nicht verfälschen, auch wenn die Entnahmesonde teilweise außerhalb des Dampferzeugers wie dargestellt geführt wird.

Eine am oberen Durchtritt der Entnahmesonde 10 an der Rauchgaswand 11 angeordnete Leiteinrichtung 12 schützt die Entnahmesonde vor eventueller Falschluft von der Antriebsseite der Rauchgasströmung 9 her.

Die kontinuierliche Reinigung, die von der Blockwarte eines Kraftwerks oder vor Ort durchgeführt werden kann, gestattet geringe Rauchgasförderdrücke und führt zu einer einwandfreien schnellen O₂-Messung für die Regelung der Dampferzeugeranlage.

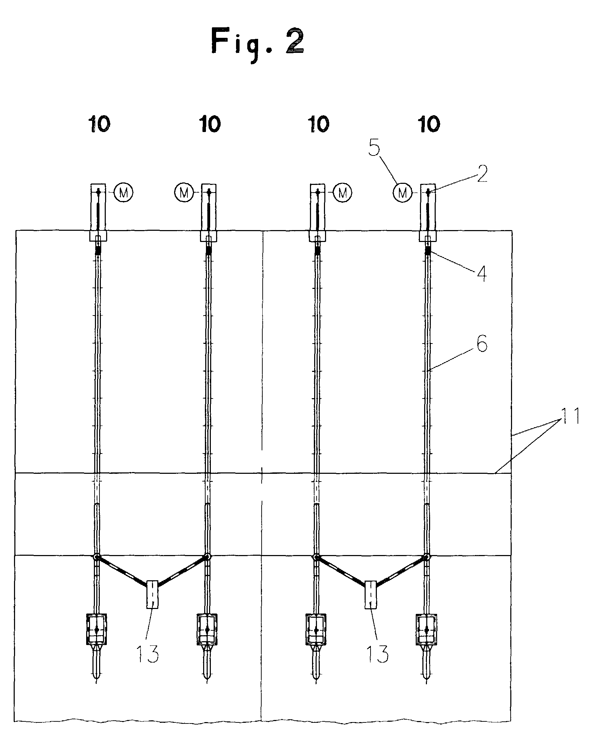

In Fig. 2 ist eine Seitenansicht in Rauchgasströmung nach der Fig. 1 dargestellt. Die Figur zeigt die Anordnung mehrerer Entnahmesonden 10 über den Rauchgasquerschnitt mit den Rauchgaswänden 11 verteilt, um eine aussagefähige Netzmessung zu verwirklichen, d.h. einer Messung zur Erfassung eines repräsentativen Abbildes der im Rauchgaskanal vorliegenden Rauchgasströme.

Weiterhin zeigt die Anordnung wie beispielhaft zwei Meßgeräte 13 an vier Meßsonden 10 über die Entnahmestellen 7 zur O₂-Messung angeschlossen sind. Dabei sind jeweils zwei Meßsonden 10 mit einem Meßgerät 13 verbunden. Andeutungsweise sind die Entnahmebohrungen 6 und die Rohrbürste 4 sowie das Kettenrad 2 mit dem Motorantrieb 5 gezeigt.

## Patentansprüche

1. Entnahmesonde für Sauerstoff-Messungen an kohlenstaubgefeuerten Dampferzeugeranlagen bestehend aus einem Entnahmesodenrohr mit einer Anzahl von im Entnahmesondenrohr angeordneten Entnahmebohrungen und mit einer am Entnahmesondenrohr vorgesehenen Entnahmestelle für ein angeschlossenes O₂-Meßgerät, dadurch gekennzeichnet, daß im Entnahmesondenrohr (1) eine Reinigungsvorrichtung geführt ist und daß die Reinigungsvorrichtung für die Abreinigung der Entnahmebohrungen (6) und der Entnahmestelle (7) für das angeschlossene O₂-Meßgerät (13) vorgesehen ist.

2. Entnahmesonde nach Anspruch 1, dadurch gekennzeichnet, daß die Reinigungsvorrichtung an einer umlaufenden Kette (3) geführt ist.

3. Entnahmesonde nach Anspruch 1, dadurch gekennzeichnet, daß die Reinigungsvorrichtung aus einer Rohrbürste (4) besteht.

4. Entnahmesonde nach Anspruch 1 oder 2, dadurch gekennzeichnet, daß an den Endpunkten des Entnahmesondenrohres (1) jeweils ein Kettenrad (2) für die umlaufende Kette (3) angeordnet ist.

5. Entnahmesonde nach Anspruch 1, dadurch gekennzeichnet, daß die Entnahmebohrungen (6) im wesentlichen in einer geraden Linie und in einer bestimmten Anzahl im Entnahmesondenrohr (1) angeordnet sind.

6. Entnahmesonde nach Anspruch 1 oder 4, dadurch gekennzeichnet, daß ein Kettenrad (2) mit einem Elektromotor (5) verbunden und von diesem angetrieben ist und daß die im Entnahmesondenrohr (1) an der Kette (3) angebrachte Rohrbürste (4) von einem Umkehrpunkt zum anderen Umkehrpunkt geführt ist.

7. Entnahmesonde nach Anspruch 1, dadurch gekennzeichnet, daß die Entnahmesonde (10) mit dem Entnahmesondenrohr (1) und der umlaufenden Kette (3) mit einem zweiten Rohr (8) gekapselt und so gestaltet ist, daß mögliche Lecks die O₂-Messung bei Führung der Entnahmesonde teilweise außerhalb eines Dampferzeugers nicht verfälschen.

8. Entnahmesonde nach Anspruch 1, dadurch gekennzeichnet, daß die Entnahmesonde (10) für die kontinuierliche Abreinigung der Entnahmebohrungen (6) und der Meßstelle (7) für die O₂-Messung von der Blockwarte eines Kraftwerks oder vor Ort an der Dampferzeugeranlage durchführbar ist.
